# EUROPEAN PATENT APPLICATION

(11) **EP 1 566 407 A1**
(43) Date of publication of application: **24.08.2005**
(21) Application number: 03775872.9
(22) Date of filing: 25.11.2003
(51) Int. Cl.: C08L 23/00, C09D 123/00, B32B 27/32, C09J 7/02

(54) **RELEASE AGENT, LAYERED PRESSURE-SENSITIVE ADHESIVE PRODUCT, AND LAYERED PRESSURE-SENSITIVE ADHESIVE TAPE**

(30) Priority: 27.11.2002 JP 2002344553
(71) Applicant: MITSUBISHI CHEMICAL CORPORATION, Tokyo 108-0014 (JP)
(72) Inventor: SHIBATOU, Keisuke, Yokkaichi-shi, Mie 510-8530 (JP); YAMAMOTO, Satoru, Yokkaichi-shi, Mie 510-8530 (JP); SEKI, Motohiro, Yokkaichi-shi, Mie 510-8530 (JP); NOZAWA, Koutarou, Yokkaichi-shi, Mie 510-8530 (JP); AKASHIGE, Etsushi, c/o Yokkaichi Laboratory, Yokkaichi-shi, Mie 510-8530 (JP); AMAMIYA, Takahiro, c/o Products R & D Center, Yokkaichi-shi, Mie 510-8530 (JP)
(74) Representative: Woods, Geoffrey Corlett
(86) International application number: PCT/JP2003/014999
(87) International publication number: WO 2004/048464

(57) **Abstract**

A release agent for forming a release layer contacting with an adhesive layer, comprising (A) a polyolefin having a weight-average molecular weight of not less than 1 x 10⁴, which may contain a functional group, and (B) a hydrocarbon having a viscosity of 1 to 1 x 10⁴ cP as measured at 23°C according to JIS K-7117, a weight ratio of the polyolefin (A) to the hydrocarbon (B) being 97:3 to 60:40. Such a release agent provides a novel release agent that is usable as an alternative material of a silicone-based and fluororesin-based release agents.

## Description

### TECHNICAL FIELD

The present invention relates to a release agent, and more particularly, to a release agent for forming a release layer contacting with an adhesive layer. In addition, the present invention relates to an adhesive laminate and an adhesive laminated tape.

### BACKGROUND ART

Release agents have been widely used for protecting an adhesive surface of an adhesive tape (the wording "adhesive" used in the present specification has a still broader meaning including "bonding", etc.). From the standpoint of a releasability, one of the most excellent release agents is a silicone-based release agent (for example, Japanese Patent Application Laid-Open (KOKAI) Nos. 1-168996(1989), 6-41500(1994) and 2001-294718). However, the silicone-based release agents contain a trace amount of a siloxane-based gas which tends to cause significant problems such as corrosion depending upon applications of the release agents. Therefore, there have been proposed fluororesin-based release agents which are usable as an alternative material of the silicone-based release agents. However, these fluororesin-based release agents still fail to exhibit a satisfactory releasability.

### DISCLOSURE OF THE INVENTION

Thus, an object of the present invention is to provide a novel release agent which is usable as an alternative material of the silicone-based release agents and the fluororesin-based release agents.

To accomplish the aim, in an aspect of the present invention, there is provided a release agent for forming a release layer contacting with an adhesive layer, comprising (A) a polyolefin having a weight-average molecular weight of not less than 1 x 10⁴, which may contain a functional group, and (B) a hydrocarbon having a viscosity of 1 to 1 x 10⁴ cP as measured at 23°C according to JIS K-7117, a weight ratio of the polyolefin (A) to the hydrocarbon (B) being 97:3 to 60:40.

In another aspect of the present invention, there is provided an adhesive laminate comprising an adhesive layer and a release layer contacting with the adhesive layer, the release layer comprising the above release agent.

In a further aspect of the present invention, there is provided an adhesive laminated tape comprising a sheet-like substrate, and an adhesive layer and a release layer which are successively formed on at least one surface of the sheet-like substrate, the release layer comprising the above release agent.

In a still further aspect of the present invention, there is provided and adhesive laminated tape comprising two sheet-like substrates, and an adhesive layer and a release layer which are interposed between the two sheet-like substrates, the release layer comprising the above release agent.

### PREFERRED EMBODIMENT FOR CARRYING OUT THE INVENTION

The present invention is described in detail below. First, the release agent of the present invention is described. The release agent of the present invention is used for forming a release layer contacting with an adhesive layer, and comprises as essential components, (A) a polyolefin having a weight-average molecular weight of not less than 1 x 10⁴, which may contain a functional group, and (B) a hydrocarbon having a viscosity of 1 to 1 x 10⁴ cP as measured at 23°C according to JIS K-7117.

In the present invention, as the polyolefin (A), there may be used homopolymers and copolymers of various olefins, and copolymers of the olefins with a monomer having a functional group. Specific examples of the polyolefin may include (co)polymers of α-olefins such as ethylene, propylene, 1-butene, 1-hexene and 1-octene, as well as ring-opened polymers of alicyclic olefins such as norbornene, cyclopentene and cyclooctene. Further, there may also be used diene-based rubbers obtained by living polymerization such as typically polyisoprene, or hydrogenated products thereof, as well as nucleus-hydrogenated products of styrene-butadiene copolymers and nucleus-hydrogenated products of styrene-isoprene copolymers.

An example of the preferred polyolefin (A) is polyethylene and a copolymer of ethylene with the other olefin. Specific examples of the copolymer may include copolymers of ethylene with an α-olefin having about 3 to 20 carbon atoms such as propylene, 1-butene, 1-pentene, 3-methyl-1-butene, 1-hexene, 4-methyl-1-pentene, 3-methyl-1-pentene, 1-heptene, 1-octene, 1-decene, 1-dodecene, 1-tetradecene, 1-hexadecene, 1-octadecene and 1-eicocene, as well as copolymers of ethylene with norbornene or ethylidene norbornene. The ethylene content in these copolymers is usually not less than 30 mol%, preferably not less than 50 mol%, more preferably not less than 80 mol%. When the ethylene content is too small, the resultant release agent tends to be deteriorated in heat resistance. The upper limit of the ethylene content is usually 100 mol%.

Another example of the preferred polyolefin (A) is polypropylene or a copolymer of propylene with ethylene or the other olefin as exemplified above. The polypropylene may be in the form of either an isotactic polymer, a syndiotactic polymer or an atactic polymer. Also, the copolymer may be in the form of either a random copolymer or a block copolymer. The propylene content in the copolymer of propylene with the other olefin is usually not less than 50 mol%, preferably not less than 70 mol%. When the propylene content is too small, the resultant release agent tends to be deteriorated in heat resistance. The upper limit of the propylene content is usually 100 mol%.

The polyolefin (A) may be produced in the presence of various different kinds of catalysts such as Ziegler-based catalysts and metallocene-based catalysts. As the polyolefin used in the present invention, preferred are polyolefins produced in the presence of the metallocene-based catalysts, because polyolefins having a narrow molecular weight distribution and a less content of low-molecular weight components can be produced by the polymerization in the presence of the metallocene catalysts. Further, the use of the metallocene-based catalysts allows to conduct uniform copolymerization, so that production of copolymers having a considerably different comonomer content from that of an average composition can be effectively prevented. As a result, the release agent obtained from such a polyolefin produced in the presence of the metallocene-based catalysts is not only inhibited from undergoing stickiness, but also can be efficiently gelled upon a crosslinking reaction thereof, thereby enhancing a chemical resistance of the release agent by the crosslinking reaction.

Specific examples of the metallocene-based catalysts capable of producing the polyolefins suitably used in the present invention may include rac-isopropylidene bis(1-indenyl)zirconium dichloride, rac-dimethylsilyl bis-1-(2-methylindenyl)zirconium dichloride, rac-dimethylsilyl bis-1-(2-methyl-4-phenylindenyl)zirconium dichloride, rac-dimethylsilyl bis-1-(2-methyl-4,5-benzoindenyl) zirconium dichloride, isopropylidene-9-fluorenylcyclopentadienyl zirconium dichloride, etc. The polyolefin may be produced by an optional known polymerization method such as a solution polymerization method, a gas-phase polymerization method and a slurry polymerization method.

In the present invention, as the polyolefin (A), there may be used polyolefins having a weight-average molecular weight of not less than 1 x 10⁴. When the weight-average molecular weight of the polyolefin (A) is less than 1 x 10⁴, the resultant release agent tends to be lowered in mechanical strength, so that a release layer obtained from such a release agent may fail to be suitably peeled off from an adhesive layer, or a part of the release layer tends to still remain stuck onto the adhesive layer. The weight-average molecular weight of the polyolefin (A) is preferably not less than 3 x 10⁴, and the upper limit thereof is usually 100 x 10⁴.

The density of the polyolefin (A) is usually 0.86 to 0.90 g/cc, preferably 0.87 to 0.89 g/cc. When the density of the polyolefin (A) is too low, although a percentage of an amorphous portion contained therein is increased and, therefore, an amount of low-molecular weight hydrocarbons eluted therefrom tends to be increased, but a percentage of a crystalline portion therein tends to be decreased, thereby causing deterioration in mechanical strength and heat resistance of the resultant release layer. On the other hand, when the density of the polyolefin (A) is too high, the percentage of the amorphous portion contained therein tends to be decreased, so that an amount of low-molecular weight hydrocarbons dissolved therein tends to be decreased, resulting in deterioration in releasability of the obtained release agent. Further, since the low-molecular weight hydrocarbons tend to be bled out and undesirably migrated into an adhesive layer, the adhesive layer may be hindered from exhibiting a good adhesion property.

The melt index of the polyolefin (A) is usually 0.5 to 20 g/10 min as measured at 230°C under a load of 2.16 kgf. When the melt index of the polyolefin used is out of the above-specified range, it may be difficult to form the resultant release agent into a release sheet by extrusion-molding.

Also, a suitable functional group may be introduced to the polyolefin (A), or the polyolefin (A) may be crosslinked. The use of the polyolefins to which the functional group is introduced enables production of a release agent having an excellent adhesion to a substrate. Examples of the functional group introduced to the polyolefins may include reactive functional groups such as epoxy group, an acid anhydride group, carboxyl group, hydroxyl group, amino group, an isocyanate group and trimethoxysilyl group, groups having unsaturated bonds such as vinyl group, isopropenyl group, a (meth)acrylate group and allyl group, etc. The introduction of these functional groups to the polyolefins may be conducted by an ordinary method such as a method of subjecting a monomer having these functional groups with the polyolefins to addition reaction in the presence of a peroxide. Examples of the peroxide may include peroxides ordinarily used for this purpose such as ketone peroxides, hydroperoxides and diacyl peroxides. The content of the functional groups in the polyolefins to which the functional group are introduced is usually not more than 10 mol%, preferably not more than 5 mol%. When the content of the functional groups is too large, the release agent obtained from such polyolefins tends to be deteriorated in releasability. However, the lower limit of the content of the functional groups in the polyolefins is usually 0.05 mol% from the standpoint of the improvement of the effects.

The hydrocarbon (B) used in the present invention has a viscosity of 1 to 1 x 10⁴ cP as measured at 23°C according to JIS K-7117. The release agent produced using a liquid hydrocarbon having a viscosity of less than 1 cP tends to have problems such as stickiness and falling-off of the release layer from the adhesive layer. On the other hand, since the hydrocarbon having a viscosity of more than 1 x 10⁴ cP (having no fluidity) generally contains a large amount of crystalline components, the release agent produced using such a hydrocarbon tends to exhibit a high elastic modulus, resulting in deteriorated releasability thereof.

The above viscosity may be measured using a B-type rotational viscometer according to JIS K-7117. More specifically, using a B-type rotational viscometer manufactured by Tokyo Keiki Co., Ltd., to which a rotor No. 2 is fitted, a sample is measured 3 times at a sample temperature of 23°C and a rotor rotating speed of 60 rpm, and an average value of the three measured values is determined as a viscosity thereof.

Also, as the hydrocarbon (B) used in the present invention, preferred are hydrocarbons having a weight-average molecular weight of 300 to 3000. The low-molecular weight hydrocarbon having a weight-average molecular weight of less than 300 generally contains a large amount of volatile components. Therefore, the release agent produced using such a low-molecular weight hydrocarbon tends to undergo bleed-out of the low-molecular weight hydrocarbon or stickiness. On the other hand, the release agent produced using a high-molecular weight hydrocarbon having a weight-average molecular weight of more than 3000 generally exhibits a high elastic modulus and, therefore, tends to be deteriorated in releasability. The weight-average molecular weight of the hydrocarbon (B) is more preferably 300 to 2000.

As the hydrocarbon (B), there may be usually used hydrocarbons having any of an acyclic aliphatic chain structure and a saturated aliphatic ring structure. Preferred are hydrocarbons having both of the above structures. From the standpoint of a good compatibility with the polyolefin (A), carbon atoms contained in the acyclic aliphatic chain structure are present in an amount of usually not less than 50%, preferably not less than 65% based on whole carbon atoms contained in the hydrocarbon (B). Meanwhile, although the hydrocarbon (B) may include an aromatic ring structure, carbon atoms contained in the aromatic ring structure are present in an amount of usually not more than 30%, preferably not more than 10% based on whole carbon atoms contained in the hydrocarbon (B). The percentages of the carbon atoms contained in the acyclic aliphatic chain structure and the aromatic ring structure may be measured according to ASTM-3283. The hydrocarbon (B) used in the present invention may be appropriately selected from those petroleum fractions which are commercially available as process oils, for example, "DIANA PROCESS OIL" marketed from Idemitsu Kosan Co., Ltd.

The release agent of the present invention contains as essential components, the above polyolefin (A) and the hydrocarbon (B), and may further contain other additional components. Examples of the additional components may include crosslinking agents, i.e., compounds having a plurality of functional groups capable of reacting with the functional groups of the polyolefin. The amount of the crosslinking agent used may be controlled such that the molar ratio of the functional groups of the polyolefin to the functional groups of the crosslinking agent is usually 0.1 to 10. When the molar ratio between the functional groups is out of the above-specified range, the number of residual unreacted functional groups tends to be increased, generally resulting in deteriorated releasability of the resultant release agent. Examples the other additional components may include antiblocking agents, antioxidants, pigments, ultraviolet absorbers, fillers, anti-aging agents, or the like.

The release agent of the present invention may be produced by blending the above respective components with each other, and then dissolving the resultant mixture in a solvent or melt-kneading the resultant mixture. The weight ratio of the polyolefin (A) to the hydrocarbon (B) is 97:3 to 60:40. In general, when the content of the hydrocarbon (B) is too low, the resultant release agent tends to be deteriorated in releasability. On the other hand, when the content of the hydrocarbon (B) is too high, the resultant release agent tends to undergo bleed-out of the hydrocarbon (B). The weight ratio of the polyolefin (A) to the hydrocarbon (B) is preferably 80:20 to 40:60.

Next, the adhesive laminate of the present invention is described. The adhesive laminate of the present invention comprises an adhesive layer and a release layer contacting with the adhesive layer, wherein the release layer comprises the above release agent. Such an adhesive laminate having a layer structure comprising the adhesive layer and the release layer is used for production of the following adhesive laminated tape. Also, the adhesive laminate having a layer structure successively composed of a release layer, an adhesive layer and a release layer may be used as a double-sided adhesive tape which serves for bonding two adherends to each other. The adhesive layer constituting the adhesive laminate is explained below in the description for production of the adhesive laminated tape.

Next, the adhesive laminated tape of the present invention is described. The adhesive laminated tape of the present invention includes two basic embodiments.

The adhesive laminated tape according to one of the basic embodiments of the present invention comprises a sheet-like substrate, and an adhesive layer and a release layer successively formed on at least one surface of the sheet-like substrate. Namely, the adhesive laminated tape has such a layer structure successively composed of the substrate, the adhesive layer and the release layer. Upon the use thereof, the release layer is peeled off from the adhesive layer to expose the surface of the adhesive layer which is then bonded to the aimed adherend, thereby obtaining a layer structure composed of the surface of the adherend/the adhesive layer/the substrate.

The adhesive laminated tape according to another of the basic embodiments of the present invention comprises two sheet-like substrates, and an adhesive layer and a release layer interposed between the two sheet-like substrates. Namely, the above adhesive laminated tape has such a layer structure successively composed of the substrate, the adhesive layer, the release layer and the substrate. Upon the use thereof, the substrate and the release layer adjacent thereto are peeled off together from the adhesive layer to expose the surface of the adhesive layer which is then bonded to the aimed adherend, thereby obtaining a layer structure composed of the surface of the adherend/the adhesive layer/the substrate.

According to the other embodiment using the above basic embodiments, there may be provided the following adhesive laminated tape having such a layer structure successively composed of a release layer/an adhesive layer/a substrate/an adhesive layer/a release layer. Upon the use thereof, the opposite release layers are peeled off from the respective adhesive layers, so that the adhesive laminated tape can be used as a double-sided adhesive laminated tape.

Further, in the present invention, a sheet including a substrate provided on opposite surfaces thereof with a release layer and an adhesive layer, respectively (which has a layer structure composed of a release layer/a substrate/an adhesive layer·a release layer/a substrate/an adhesive layer··) may be wound into a roll which has repeated layer structures each composed of the release layer/the substrate/the adhesive layer. Upon the use thereof, the sheet is drawn out of the roll while peeling off the release layer of one layer structure from the adhesive layer of the adjacent layer structure, so that the exposed surface of the adhesive layer may be bonded to the aimed adherend.

As the sheet-like substrate used on the side of the release layer or the adhesive layer, there may be employed substrates ordinarily used for these purposes. Examples of the sheet-like substrate may include films composed of resins, e.g., polyesters such as polyethylene terephthalate and polybutylene terephthalate, polyolefins such as polypropylene, polyethylene and polymethyl pentene, polycarbonates or the like; papers such as glassine papers, woodfree papers, coated papers, impregnated papers and synthetic papers; metal foils such as aluminum foil and stainless steel foil, etc. The thickness of the substrate is usually 10 to 100 µm, preferably 25 to 50 µm. Meanwhile, the substrate used in the present invention may be subjected to corona treatment, plasma treatment, flame plasma treatment, etc., in order to enhance its adhesion to the adhesive layer or the release layer. In addition, the substrate may be provided with a primer layer, etc. As the material of the primer layer, there may be used polymer materials such as polyethylene, polypropylene, styrene-based copolymers, polyesters, polyurethanes, polyvinyl alcohol, polyethylene imines, polyacrylates, polymethacrylates and modified products of these polymers (so-called anchor agents).

Upon the production of the adhesive tape, the adhesive layer and the release layer may be formed by ordinary methods. The release layer may be usually formed by a method of applying a release agent solution onto the sheet-like substrate, a method of melt-extruding the release agent on the sheet-like substrate from an extruder for lamination thereon, or a method of co-extruding a material of the substrate and the release agent from an extruder.

As an adhesive for the adhesive layer, there may be mainly used materials generally called "adhesives", such as acrylic adhesives, rubber-based adhesives, polyurethane-based adhesives and silicone-based adhesives, as well as the other adhesives. The adhesive layer may be usually formed by a method of applying an adhesive solution onto the sheet-like substrate or the release layer formed on the sheet-like substrate, a method of transferring an adhesive layer formed on the other substrate onto the aimed substrate, or a method of co-extruding a material of the substrate, the release agent and the adhesive from an extruder.

Upon the production of the laminate, preferred is that a plurality of the layers is simultaneously melt-extruded and molded, e.g., by co-extrusion of the substrate layer and the release layer, from the standpoint of excellent productivity. When the release layer is formed by a melt-extruding method, the melt index of the release agent as measured at 230°C under a load of 2.16 kgf is usually 0.5 to 40 g/10 min, preferably 1 to 20 g/10 min. The release agent having a melt index more than or less than the above-specified range tends to be deteriorated in extrusion-molding processability.

When the substrate and the release layer, or the substrate, the release layer and the adhesive layer, are co-extruded, the resultant laminate may be successively subjected to monoaxial stretching or biaxial stretching to decrease the thickness thereof and enhance the strength thereof. The stretching ratio used in the stretching procedure is usually 2 to 10 times. The thickness of the resultant release layer is usually 0.5 to 150 µm, preferably 0.5 to 10 µm, more preferably 0.5 to 5 µm. When the thickness of the release layer is too small, it may be difficult to ensure a uniform thickness thereof. On the other hand, when the thickness of the release layer is too large, the resultant laminate tends to be deteriorated in elastic modulus.

### EXAMPLES:

The present invention is described in more detail by Examples, but the Examples are only illustrative and not intended to limit the scope of the present invention. Various properties used in Examples and Comparative Examples were measured by the following methods.

### (1) Evaluation of releasability:

First, an adhesive laminated tape was prepared, and then cured and stabilized at 25°C and 50% RH for 72 hours. Next, the obtained adhesive laminated tape was cut into a tape of 25 mm in width and 150 mm in length, and then the back surface of a substrate disposed adjacent to an adhesive layer was fixed on a stainless steel plate. Then, a release layer was separated from the adhesive layer at a boundary face therebetween in an atmosphere of 25°C and 50% RH at a peel angle of 180° and a pulling velocity of 300 mm/min using a peel tester to measure a release force (peel force) required. The release force was determined as an average value of five measurements. The smaller the release force, the easier the peeling of the release layer from the adhesive layer.

### (2) Evaluation of heat resistance:

First, an adhesive laminated tape was prepared, and then cured and stabilized at 25°C and 50% RH for 72 hours. Next, the obtained adhesive laminated tape was kept at 50°C under a load of 20 g/cm² for 24 hours. After cooling to room temperature, the adhesive laminated tape was cut into a tape of 25 mm in width and 150 mm in length, and then the back surface of a substrate disposed adjacent to an adhesive layer thereof was fixed on a stainless steel plate. Then, a release layer was separated from the adhesive layer at a boundary face therebetween in an atmosphere of 25°C and 50% RH at a peel angle of 180° and a pulling velocity of 300 mm/min using a peel tester to measure a release force (peel force) required. The release force was determined as an average value of five measurements. The smaller the release force, the easier the peeling of the release layer from the adhesive layer.

The following polyolefins, adhesives and hydrocarbons were used. The weight-average molecular weights of the polyolefins and hydrocarbons were calculated from a calibration curve prepared using a standard polystyrene by a gel permeation chromatography. The measurement conditions were as follows.

**Table 1**

| Measurement conditions of weight-average molecular weight of polyolefin | |
|---|---|
| Equipment | "GPC150C" manufactured by Waters Inc. |
| Solvent | o-dichlorobenzene |
| Temperature | 140°C |
| Injection concentration | 0.1% by weight |
| Injection amount | 200 µL |
| Flow rate | 1.0 mL/min |
| Detector | IR; wavelength: 3.42 µm |
| Column | "AD806MS" manufactured by Showa Denko Co., Ltd. |
| Column size | 30 cm x 3 columns |
| Method for calculation of molecular weight | : Calculated as a molecular weight of a linear polyethylene by Universal Calibration Method |

**Table 2**

| Measurement conditions of weight-average molecular weight of hydrocarbon | |
|---|---|
| Equipment | "TOSOH 8020-4" manufactured by Tosoh Co., Ltd. |
| Solvent | Tetrahydrofuran |
| Temperature | 40°C |
| Injection concentration | 0.2% by weight |
| Injection amount | 100 µL |
| Flow rate | 1.0 mL/min |
| Detector | RI |
| Column | "TSKgel G2000HXL" manufactured by Tosoh Co., Ltd. |
| Column size | 30 cm x 2 columns |

Polyolefin (PE-1): Ethylene-hexene random copolymer produced in the presence of a metallocene catalyst; composition (measured by H-NMR; similarly applied to the following descriptions): molar ratio of ethylene to hexene: 90:10; weight-average molecular weight: 70,100; ratio of weight-average molecular weight to number-average molecular weight: 2.3; density: 0.880 g/cc.

Polyolefin (PE-2): Ethylene-hexene random copolymer produced in the presence of a metallocene catalyst; composition: molar ratio of hexene to ethylene: 5.5:94.5; weight-average molecular weight: 80,000; ratio of weight-average molecular weight to number-average molecular weight: 2.2; density: 0.900 g/cc.

Polyolefin (PE-3): Hydroxyl-containing modified ethylene-hexene random copolymer which was produced by mixing 100 parts by weight of the polyolefin (PE-1), 3 parts by weight of 2-hydroxyethyl methacrylate and 0.15 part by weight of 2,5-dimethyl-2,5-di-tert-butyl peroxide with each other, and then kneading the resultant mixture at 180°C and a rotating speed of 60 rpm in a nitrogen atmosphere for 3 min using a labo-plastomill manufactured by Toyo Seiki Co., Ltd.; content of 2-hydroxyethyl methacrylate (HEMA) estimated from the measured value of carbonyl characteristic absorption intensity (value observed at 1724 cm⁻¹ in FT-IR spectra; similarly applied to the following descriptions): 0.9% by weight; weight-average molecular weight: 82,000.

Polyolefin (PE-4): Ethylene-hexene copolymer "COLONEL KF370" produced by Nippon Polyethylene Co., Ltd.; weight-average molecular weight: 70,000; ratio of weight-average molecular weight to number-average molecular weight: 2.0; density: 0.905 g/cc.

Polyolefin (PE-5): Hydroxyl-containing modified ethylene-hexene random copolymer which was produced by the same kneading method as defined above for the production of the polyolefin (PE-3) except that an ethylene-propylene copolymer (composition: molar ratio of ethylene to propylene: 80:20 and weight-average molecular weight: 96,000) obtained by conducting polymerization in the presence of a metallocene catalyst was used instead of the polyolefin (PE-1); content of HEMA estimated from the measured value of carbonyl characteristic absorption intensity: 1.1% by weight; weight-average molecular weight: 80,000.

Polyacrylic ester-based adhesive A: Produced by polymerizing a solution prepared by dissolving 100 parts by weight of n-butyl acrylate and 5 parts by weight of acrylic acid in toluene, in the presence of benzoyl peroxide by an ordinary method to obtain a solution (solid content: 50% by weight) of an acrylic polymer having a weight-average molecular weight of about 500,000; adding ethyl acetate to the acrylic polymer solution such that the solid content thereof was 30% by weight, and then adding an isocyanate-based crosslinking agent to the solution in an amount of 3 parts by weight based on 100 parts by weight of the acrylic polymer.

Low-molecular weight hydrocarbon (LH-1): "DIANA PROCESS OIL PW-90" produced by Idemitsu Kosan Co., Ltd.; weight-average molecular weight: 880; number-average molecular weight: 760; pour point: -15.0°C (value specified in catalogue); content of carbon atoms in acyclic aliphatic chain structure: 71.0%; content of carbon atoms in saturated aliphatic ring structure: 29.0%; viscosity: 195 cP as measured by the method described in the specification.

Low-molecular weight hydrocarbon (LH-2): "DIANA PROCESS OIL PW-380" produced by Idemitsu Kosan Co., Ltd.; weight-average molecular weight: 1,450; number-average molecular weight: 1,200; pour point: -15°C (value specified in catalogue); content of carbon atoms in acyclic aliphatic chain structure: 73.0%; content of carbon atoms in saturated aliphatic ring structure: 27.0%; viscosity: 950 cP as measured by the same method as described above.

### Example 1:

The polyolefin (PE-1) and the hydrocarbon were blended with each other at a blending ratio shown in Table 3, and kneaded together at 230°C for an average residence time of 3 min using a twin-screw extruder, thereby obtaining a release agent. The thus obtained release agent was extruded at 240°C from a T-die molding machine, thereby obtaining a release sheet composed of a release layer solely. It was confirmed that the resultant release sheet had a thickness of 50 µm.

Using an applicator (for 100 µm) manufactured by Taiyu Kizai Co., Ltd., a solution of the polyacrylic ester-based adhesive A was applied onto a 25 µm-thick polyester film such that the thickness and width of a coating solution layer were 100 µm and 8 cm, respectively. When two seconds elapsed after application of the coating solution, the coated film was dried for 2 min within a dryer heated to 80°C ("SAFEVEN DRYER N50 S5" manufactured by Satake Kagaku Kiki Kogyo Co., Ltd.), and then taken out of the dryer and cooled to room temperature, thereby obtaining an adhesive sheet composed of an adhesive layer and a substrate. When two minutes elapsed after cooling to room temperature, the thus obtained adhesive sheet was placed on the above release sheet, and a 2 kg roller was reciprocated thereover by one stroke at a velocity of 30 cm/min, thereby pressure-bonding the adhesive sheet and the release sheet to each other. As a result, there was obtained an adhesive laminated tape having a layer structure composed of a release layer/an adhesive/the substrate.

### Examples 2 to 6:

The polyolefin and the hydrocarbon were blended with each other at a blending ratio shown in Table 3, and then kneaded together at 230°C for an average residence time of 3 min using a twin-screw extruder, thereby obtaining a release agent. The thus obtained release agent was co-extruded together with LLDPE (density: 0.93 g/cc; melt index: 2.0 g/10 min) at 240°C from a T-die molding machine, thereby obtaining a release sheet composed of a substrate and a release layer. It was confirmed that the thicknesses of the resultant substrate and release layer were 25 µm and 1 µm, respectively. Meanwhile, in Example 5, upon production of the release agent, a zeolite-based anti-blocking agent having an average particle diameter of 7.5 µm was added in an amount of 2 parts by weight based on 100 parts by weight of the release agent.

Next, the adhesive sheet produced by the same method as defined in Example 1 was pressure-bonded to the thus obtained release sheet, thereby obtaining an adhesive laminated tape having a layer structure composed of a substrate/a release layer/an adhesive layer/a substrate.

### Example 7:

30 parts by weight of the polyolefin (PE-3), 50 parts by weight of the polyolefin (PE-1) and 20 parts by weight of the hydrocarbon (LH-1) were dissolved in toluene heated to 60°C, and then the resultant solution was cooled, thereby preparing a release agent solution containing a release agent at a concentration of 2% by weight. The resultant release agent solution was applied onto a 25 µm-thick polyester film such that the dried coating layer had a thickness of 0.1 µm, and then dried at 150°C for 1 min, thereby obtaining a release sheet. Further, a solution of the polyacrylic ester-based adhesive A was applied onto a release layer of the release sheet such that the dried coating layer had a thickness of 40 µm, and then dried at 80°C for 5 min, thereby forming an adhesive layer thereon. The thus obtained adhesive layer was bonded to a 25 µm-thick polyester film as a substrate, thereby producing an adhesive laminated tape having a layer structure composed of the substrate/the release layer/the adhesive layer/the substrate.

### Example 8:

"NY718A" produced by Mitsubishi Kagaku Co., Ltd., (a butyl acetate solution containing 76% by weight of a three functional isocyanate produced by adding 3 mol of an aliphatic diisocyanate to 1 mol of triol) was added to the release agent solution prepared in Example 7, thereby obtaining a release agent solution containing the crosslinking agent. The resultant solution contained as the crosslinking agent, an isocyanate group in an amount of 1.1 equivalents based on HEMA contained in the polyolefin (PE-3). The same procedure as defined in Example 7 was conducted except that the above prepared release agent solution was used, thereby obtaining a release sheet composed of the substrate and the release layer. Further, an adhesive laminated tape having a layer structure composed of the substrate/the release layer/the adhesive layer/the substrate was produced by the same method as defined in Example 7.

### Example 9:

A low-density polyethylene having a density of 0.920 g/cc and a melt index of 7.0 g/10 min was melt-extruded and laminated on a rough surface of a substrate for peeling made of a machine-glazed bleached kraft paper (basis weight: 80 g/m²; produced by Daioh Seishi Co., Ltd.), to form a primer layer having a thickness of 30 µm thereon. Further, the same release agent as used in Example 4 was melt-extruded and laminated on the primer layer at 240°C such that the resultant release layer had a thickness of 30 µm, thereby obtaining a release sheet having a layer structure composed of the substrate/the primer layer/the release layer. Next, the same procedure as defined in Example 2 was conducted, thereby obtaining an adhesive laminated tape having a layer structure composed of the substrate/the primer layer/the release layer/the adhesive layer/the substrate.

### Example 10:

50 parts by weight of the polyolefin (PE-5) and 50 parts by weight of the hydrocarbon (LH-1) were dissolved in toluene heated to 60°C, and then the resultant solution was cooled, thereby preparing a release agent solution containing a release agent at a concentration of 2% by weight. "NY718A" produced by Mitsubishi Kagaku Co., Ltd., (butyl acetate solution containing 76% by weight of a three functional isocyanate produced by adding 3 mol of an aliphatic diisocyanate to 1 mol of triol) was added to the thus prepared release agent solution, thereby obtaining a release agent solution containing the crosslinking agent. The resultant solution contained as the crosslinking agent, an isocyanate group in an amount of 1.2 equivalents based on HEMA contained in the polyolefin (PE-5). The same procedure as defined in Example 7 was conducted except that the above prepared crosslinking agent-containing release agent solution was used, thereby obtaining a release sheet composed of the substrate and the release layer, and further obtaining an adhesive laminated tape having a layer structure composed of the substrate/the release layer/the adhesive layer/the substrate.

### Example 11:

56 parts by weight of the polyolefin (PE-1), 24 parts by weight of the polyolefin (PE-5) and 20 parts by weight of the hydrocarbon (LH-1) were dissolved in toluene heated to 60°C, and then the resultant solution was cooled, thereby preparing a release agent solution containing a release agent at a concentration of 2% by weight. "NY718A" produced by Mitsubishi Kagaku Co., Ltd., was added to the thus prepared release agent solution, thereby obtaining a release agent solution containing the crosslinking agent. The resultant solution contained as the crosslinking agent, an isocyanate group in an amount of 1.2 equivalents based on HEMA contained in the polyolefin (PE-5). The same procedure as defined in Example 7 was conducted except that the above prepared crosslinking agent-containing release agent solution was used, thereby obtaining a release sheet composed of the substrate and the release layer, and further obtaining an adhesive laminated tape having a layer structure composed of the substrate/the release layer/the adhesive layer/the substrate.

### Example 12:

The same procedure as defined in Example 2 was conducted except that a release agent made of 70 parts by weight of the polyolefin (PE-4) and 30 parts by weight of the hydrocarbon (LH-2) was used, thereby obtaining an adhesive laminated tape having a layer structure composed of the substrate/the release layer/the adhesive layer/the substrate.

### Comparative Example 1:

The same procedure as defined in Example 2 was conducted except that a release agent made of the polyolefin (PE-1) solely was used, thereby obtaining an adhesive laminated tape having a layer structure composed of the substrate/the release layer/the adhesive layer/the substrate.

### Comparative Example 2:

The same procedure as defined in Example 7 was conducted except that a 2 wt% toluene solution of the polyolefin (PE-1) was used as a release agent solution, thereby obtaining an adhesive laminated tape having a layer structure composed of the substrate/the release layer/the adhesive layer/the substrate.

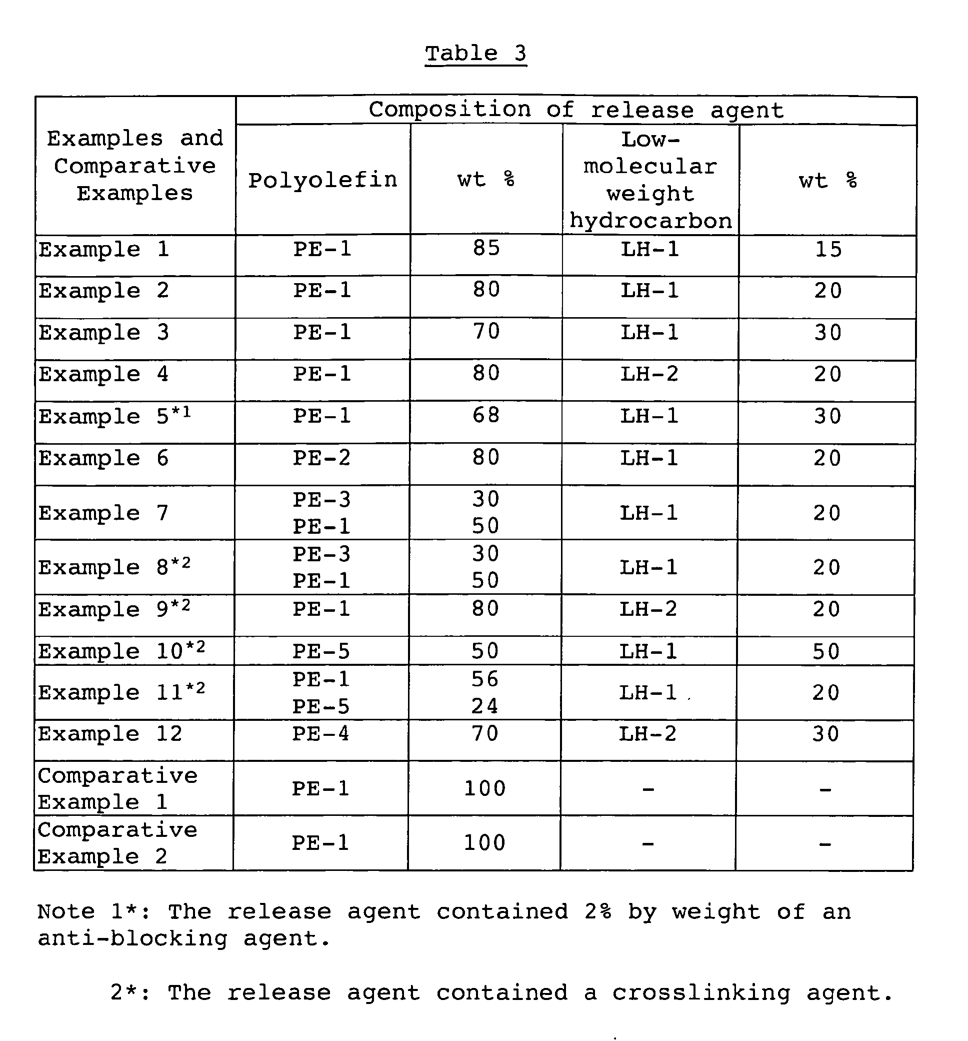

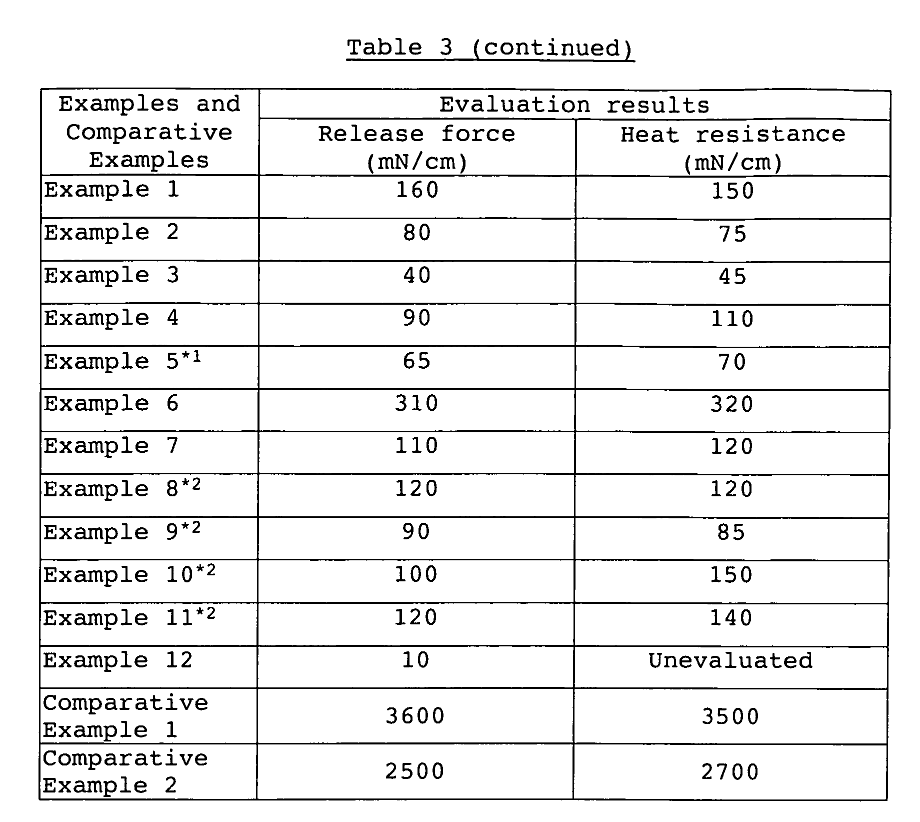

### INDUSTRIAL APPLICABILITY

According to the present invention, there is provided a noble release agent which is usable as an alternative material of silicone-based release agents or fluororesin-based release agents.

## Claims

1. A release agent for forming a release layer contacting with an adhesive layer, comprising (A) a polyolefin having a weight-average molecular weight of not less than 1 x 10⁴, which may contain a functional group, and (B) a hydrocarbon having a viscosity of 1 to 1 x 10⁴ cP as measured at 23°C according to JIS K-7117, a weight ratio of the polyolefin (A) to the hydrocarbon (B) being 97:3 to 60:40.

2. A release agent according to claim 1, wherein said polyolefin (A) has a density of 0.86 to 0.90 g/cc.

3. A release agent according to claim 1 or 2, wherein said polyolefin (A) has a melt index of 0.5 to 20 g/10 min as measured at 230°C under a load of 2.16 kgf.

4. A release agent according to any of claims 1 to 3, wherein said polyolefin (A) is a copolymer of ethylene with the other α-olefin, or a polymer obtained by introducing a functional group to the copolymer.

5. A release agent according to any of claims 1 to 3, wherein said polyolefin (A) is polypropylene, a copolymer of propylene with the other α-olefin, or a polymer obtained by introducing a functional group to polypropylene or the copolymer.

6. A release agent according to any of claims 1 to 5, wherein said polyolefin (A) is an olefin polymer produced in the presence of a metallocene catalyst, or a polymer obtained by introducing a functional group to the olefin polymer.

7. A release agent according to any of claims 1 to 6, wherein said hydrocarbon (B) has an acyclic aliphatic chain structure and a saturated aliphatic ring structure.

8. A release agent according to claim 7, wherein carbon atoms contained in said acyclic aliphatic chain structure are present in an amount of not less than 50% based on whole carbon atoms contained in the hydrocarbon (B).

9. A release agent according to any of claims 1 to 8, wherein the polyolefin (A) has a functional group, and said release agent further comprises a reactive compound capable of reacting with the functional group.

10. An adhesive laminate comprising an adhesive layer and a release layer contacting with the adhesive layer, said release layer comprising the release agent as defined in any of claims 1 to 9.

11. An adhesive laminated tape comprising a sheet-like substrate, and an adhesive layer and a release layer successively formed on at least one surface of the sheet-like substrate, said release layer comprising the release agent as defined in any of claims 1 to 9.

12. An adhesive laminated tape comprising two sheet-like substrates, and an adhesive layer and a release layer interposed between the two sheet-like substrates, said release layer comprising the release agent as defined in any of claims 1 to 9.
